Europäisches Patentamt

European Patent Office

Office européen des brevets

(19)

(11) Veröffentlichungsnummer: **0 049 363**
**B1**

(12) **EUROPÄISCHE PATENTSCHRIFT**

(45) Veröffentlichungstag der Patentschrift:
28.09.83

(21) Anmeldenummer: 81106775.0

(22) Anmeldetag: 29.08.81

(51) Int. Cl.³: **C 01 B 25/26**, A 23 K 1/175

(54) Verfahren zur Herstellung natrium-, calcium- und gegebenenfalls magnesiumhaltiger Mischphosphate für die Tierernährung.

(30) Priorität: 04.10.80 DE 3037663

(43) Veröffentlichungstag der Anmeldung:
14.04.82 Patentblatt 82/15

(45) Bekanntmachung des Hinweises auf die Patenterteilung:
28.09.83 Patentblatt 83/39

(84) Benannte Vertragsstaaten:
BE FR NL

(56) Entgegenhaltungen:
DD-A-62 545
DE-B-1 692 434
DE-B-2 110 759
DE-B-2 340 739
DE-C-1 226 994
DE-C-1 301 705
DE-C-1 816 660
GB-A-1 242 092

(73) Patentinhaber: Chemische Fabrik Kalk GmbH, Kalker Hauptstrasse 22 Postfach 91 01 57, D-5000 Köln 91 (DE)

(72) Erfinder: Geiersberger, Karl, Dr. Dipl.-Chem., Paffendorfstrasse 22, D-5000 Köln 91 (DE)
Erfinder: Grams, Gerhard, Dr. Dipl.-Chem., Eiserweg 32, D-5064 Rösrath (DE)
Erfinder: Kerscher, Utto, Dr. Dipl.-Chem., Am Beissel 25, D-5042 Erftstadt (DE)
Erfinder: Ratajczak, Johann, Deutz-Kalker Strasse 138, D-5000 Köln 21 (DE)

### Verfahren zur Herstellung natrium-, calcium- und gegebenenfalls magnesiumhaltiger Mischphosphate für die Tierernährung

Mischphosphate des Calciums, Natriums und gegebenenfalls Magnesiums werden als Futterzusatzmittel zur Deckung des Phosphor-, Calcium-, Natrium- und Magnesiumbedarfs landwirtschaftlicher Nutztiere eingesetzt. Die hierfür verwendeten Mischphosphate enthalten als Komponenten überwiegend Natrium- bzw. Calciumphosphate in Form der Mono- bzw. Diphosphate und Magnesiumphosphat vorzugsweise als Diphosphat. Die Phosphate liegen als Salze der Ortho-phosphorsäure vor.

Verfahren zur Herstellung von natrium-, calcium- und magnesiumhaltigen Mischphosphaten werden bereits in der DE-C-1 226 994, der DE-C-1 301 705, der DE-B-1 692 434, der DE-C-1 817 127 und in der DE-B-2 110 759 beschrieben. Weiter ist ein Verfahren zur Herstellung eines natrium- und calciumhaltigen Mischphosphats Gegenstand der DE-C-563 234.

Für die Herstellung der Mischphosphate werden nach den herkömmlichen Verfahren die Oxide, Hydroxide oder Carbonate des Natriums, Calciums und gegebenenfalls Magnesiums mit Phosphorsäure oder gegebenenfalls saurer Natriumphosphatlösung umgesetzt. Es entstehen Mischungen der Einzelkomponenten, die bei Temperaturen bis zu 120°C schonend getrocknet werden. Die Endprodukte enthalten noch Kristallwasser, wie beispielsweise $CaHPO_4 \cdot 2\,H_2O$, $MgHPO_4 \cdot 3\,H_2O$, $Na_2HPO_4 \cdot 2\,H_2O$ oder $Na_2HPO_4 \cdot 7\,H_2O$. In der DE-B-1 924 069 wird ein Verfahren zur Herstellung eines kristallinen Magnesium-Natrium-Phosphats der Formel $MgNaPO_4 \cdot 1{,}5\,H_2O$ beschrieben, das bei Temperaturen von 120 – 130°C getrocknet wird. Beim Trocknen des Phosphats bei Temperaturen über 200°C entsteht ein besser wasserlösliches Produkt. Ein weiteres Verfahren zur Herstellung dieser Verbindung ist Gegenstand der DE-B-1 924 284.

Die Mischphosphate der genannten Zusammensetzungen werden in Form von Mischfuttern und Mineralfuttern zur Fütterung landwirtschaftlicher Nutztiere eingesetzt. Dem Mischfutter werden sie in Mengen von 0,1 bis 3 Gew.-% zugesetzt und mit gebräuchlichen organischen Futtermitteln, wie beispielsweise Getreide, Tapioka, Mühlennachprodukten und eiweißhaltigen Futtermitteln, wie Nachprodukten der Ölgewinnung, wie beispielsweise Sojaschrot, Sonnenblumen- oder Rapsschrot, vermischt. Die Mischungen werden vorteilhaft mittels Pelletpressen zu Würfeln oder Zylindern in Größen von beispielsweise 2 bis 10 × 20 mm kompaktiert.

Für Mineralfutter werden die Mischphosphate in Mengen zwischen 2 und 90 Gew.-% mit anderen mineralischen Futtermitteln, wie vorzugsweise Calciumcarbonat, Natriumchlorid, Magnesiumoxid, mit Wirkstoffen und Spurenelement-Verbindungen des Kupfers, Kobalts, Mangans, Zink u. a., vermischt. Zur Staubbindung werden diesen Mineralfuttergemischen noch wasserhaltige Komponenten, wie beispielsweise Melasse oder Vinassen aus Rückständen der Gärungsindustrie, zugemischt.

Herkömmliche Mischphosphate sind jedoch bei diesen Weiterverarbeitungsverfahren mit erheblichen Nachteilen behaftet. Die Pelletierung der Misch- und auch der Ergänzungsfuttermittel erfordert einen hohen Energieaufwand bei geringer Durchsatzleistung und verursacht einen hohen Matrizenverschleiß. Beim Einsatz solcher Mischphosphate für Mineralfutter besteht die Gefahr des Verklumpens der damit erzeugten Gemische, und zwar verursacht durch die Hydratisierung, insbesondere der Natriumkomponente, dieser Gemische.

Es ergab sich die Aufgabe, ein Verfahren zur Herstellung von Mischphosphaten mit erheblich verbesserten Anwendungseigenschaften, insbesondere mit geringerer Reaktionsfähigkeit zu entwickeln.

Gegenstand der vorliegenden Erfindung ist ein Verfahren zur Herstellung von Natrium, Calcium und gegebenenfalls Magnesium enthaltender Mischphosphate durch Vermischen der Oxide, Hydroxide oder Carbonate des Natriums, Calciums und gegebenenfalls Magnesiums mit wäßrigen Phosphorsäure- oder sauren Natriumphosphatlösungen in einer oder mehreren Stufen, erforderlichenfalls unter Zugabe von Rückgut. Das Verfahren zeichnet sich dadurch aus, daß das Reaktionsgemisch, in dem ein Molverhältnis $Na_2O : CaO : P_2O_5$ von 0,5 bis 1,75 : 0,4 bis 2,5 : 1 eingestellt ist, nach Abschluß des Mischens bei Temperaturen von 130 bis 250°C getrocknet wird. Vorteilhaft kann in dem Reaktionsgemisch durch Zusatz der Magnesiumverbindung ein Molverhältnis von $MgO : P_2O_5$ von > 0 bis 2 : 1 eingestellt werden.

Überraschenderweise wurde gefunden, daß bei der Trocknung der Reaktionsprodukte in dem angegebenen Temperaturbereich die sonst wasserlöslichen Anteile der üblichen Mischphosphate bereits in eine überwiegend wasserunlösliche Form übergeführt werden und die Wasseraufnahme der erfindungsgemäß hergestellten Produkte auch bei längerer Lagerung an feuchter Luft stark vermindert wird. Dieser Effekt konnte nach bisheriger Kenntnis in dem angegebenen Temperaturbereich noch nicht erwartet werden. Zum Beispiel sind für die Herstellung wasserunlöslicher Calcium-Natrium-Phosphate, wie beispielsweise des Rhenanit-Typs, vielmehr Temperaturen von mindestens 600°C erforderlich, wie aus der DE-B-2 340 739 zu entnehmen ist.

Der Trocknung in dem beanspruchten Temperaturbereich kann eine Trocknung des Reaktionsgemisches bei Temperaturen bis 130°C vorangehen. So bestimmt sich beispielsweise der Restwassergehalt des Produktes nach einem einstündigen Erwärmen auf eine Temperatur von 105°C zu unter 1 Gew.-%.

Durch die Verringerung der wasserlöslichen Anteile und der Wasseraufnahme wird, wie die nachfolgenden Beispiele 5 bis 7 zeigen, die Verarbeitbarkeit der Mischphosphate erheblich verbessert. Sie zeigen keine der obengenannten Nachteile herkömmlicher Mischphosphate. Mischfutter, die die erfindungsgemäß hergestellten Mischphosphate enthalten, lassen sich einwandfrei pelletieren, die Mineralfutter stauben nicht und bleiben rieselfähig.

Die erfindungsgemäßen Mischphosphate haben höhere Nährstoffprozentagen gegenüber den herkömmlich getrockneten Produkten und erlauben bei der Herstellung der Fertigfutter die Zumischung größerer Mengen anderer Futterbestandteile. Sie lassen sich in einem weiten molaren Verhältnis von Natrium, Calcium und gegebenenfalls Magnesium zu Phosphat herstellen. Ihre Verwertbarkeit durch die damit gefütterten Nutztiere ist vergleichbar mit der Wirkung herkömmlicher Mischphosphate und ebenfalls sehr gut.

Die erfindungsgemäße Maßnahme der Trocknung führt noch nicht zur Bildung kondensierter Phosphate in den Mischphosphaten. Die chemische Reaktion, die zur Umwandlung der wasserlöslichen Anteile in überwiegend unlösliche Verbindungen führt, beruht möglicherweise auf der Bildung ternärer Natrium-Calcium-Orthophosphate.


### Beispiele 1 bis 4

Zur Herstellung der erfindungsgemäßen Mischphosphate, die in Tabelle 1 genannt sind, wird in einem Mischer Weißfeinkalk vorgelegt, gereinigte Phosphorsäure mit einem $P_2O_5$-Gehalt von 53 Gew.-% zugefügt, anschließend das Natriumcarbonat eingetragen und das Gemisch auf die Dauer von 15 Minuten gut durchmischt. Danach werden die Produkte 24 h bei Temperaturen von 100 bis 200°C getrocknet.

|  | Gew.-Teile Weißfeinkalk (mit 66,3% Ca) | Gew.-Teile Natriumcarbonat | Gew.-Teile Phosphorsäure |
|---|---|---|---|
| Beispiel 1 | 22,78 | 27,95 | 89,25 |
| Beispiel 2 | 28,81 | 27,71 | 81,13 |
| Beispiel 3 | 25,34 | 14,55 | 99,25 |
| Beispiel 4 | 27,75 | 39,95 | 57,36 |

Es werden die in Tabelle 1 spezifizierten Mischphosphate erhalten, die neben Natrium und Calcium wasserlösliche bzw. -unlösliche Anteile an $P_2O_5$ erhalten. Zur Bestimmung der wasserlöslichen Anteile werden 5 Gew.-Teile fein gemahlenes Mischphosphat in 500 Gew.-Teilen vollentsalztes Wasser eingetragen und eine halbe Stunde geschüttelt. Dabei geht das lösliche $P_2O_5$ und Natrium in Lösung. Der pH-Wert wird in der Suspension gemessen.

Die Analysen der Produkte zeigen, daß trotz weiterer Variation der Zusammensetzung durch die Trocknung bei 200°C stets ein erheblicher Abfall der wasserlöslichen Anteile erzielt wird.


### Beispiel 5

20,3 Gew.-Teile Dolomitkalkhydrat mit 32 Gew.-% Calcium und 23,1 Gew.-% Magnesium, 45,9 Gew.-Teile 50%iger Natronlauge und 80 Gew.-Teile gereinigter Phosphorsäure mit einem $P_2O_5$-Gehalt von 53 Gew.-% werden zusammengemischt und jeweils ein Teil des so hergestellten Na-Ca-Mg-Phosphats bei einer Temperatur von 60° bzw. 200°C getrocknet.

Die chemischen und physikalischen Eigenschaften der erhaltenen Produkte sind in Tabelle 2 aufgeführt. Auch hier werden durch Trocknen bei der höheren Temperatur die wasserlöslichen Anteile an Phosphat und Natrium erheblich reduziert, ebenso die Wasseraufnahme des Produktes an feuchter Luft.


### Beispiel 6

Aus Weißfeinkalk, Natriumcarbonat und gereiniger Phosphorsäure wird nach den Angaben in Beispielen 1 bis 4 ein Na-Ca-Phosphat hergestellt. Dazu wird zunächst Weißfeinkalk mit Phosphorsäure bis zur Stufe des Dicalciumphosphats umgesetzt und dieses Zwischenprodukt unter Zugabe von Natriumcarbonat und weiterer Phosphorsäure zu einem feingranulierten Na-Ca-Phosphat verarbeitet. Ein Teil des erhaltenen Grünkorns wird bei einer Temperatur von 90°C, der andere Teil bei 200°C getrocknet. Die Analyse beider Produkte ist in Tabelle 2 enthalten. Auch hier wird durch die Trocknung bei der höheren Temperatur die Wasserlöslichkeit von Phosphat und Natrium erheblich reduziert und die Wasseraufnahme an feuchter Luft abgesenkt.

Die nach den Angaben der Beispiele 5 und 6 erhaltenen Produkte werden in Mineralstoffmischungen mit folgender Zusammensetzung eingearbeitet:

Mischphosphat
gemäß der Erfindung   70 Gew.-%
CaCO₃                 10 Gew.-%
NaCl                  15 Gew.-%
Spurenelemente         2 Gew.-%
MgO                    3 Gew.-%

Diese Mineralstoffmischungen werden mit Melasse in Mengen zwischen 5 und 11 Gew.-% versetzt. Die Eigenschaften der so erhaltenen Mineralfutter sind in Tabelle 3 zusammengefaßt.

Bei der Verarbeitung der Produkte gemäß Beispiel 6 zu Mineralfuttern werden mit dem bei einer Temperatur von 90°C getrockneten Produkt nur bis 7 Gew.-% Melassezugabe rieselfähige Mischungen erhalten. Dagegen liefert das erfindungsgemäße Mischphosphat bei allen Melassedosierungen staubfreie und rieselfähige Mineralfutter.

Beispiel 7

Ein herkömmliches Mischphosphat mit

10,8 Gew.-%  Natrium
15,2 Gew.-%  Calcium
46,5 Gew.-%  P₂O₅

wird einem Mischfutter mit

46,4 Gew.-%  Maisschrot
2,0 Gew.-%  Weizenschrot
17,0 Gew.-%  Sojaextraktschrot
7,0 Gew.-%  Tapiokamehl
11,0 Gew.-%  Maiskeimschrot
6,0 Gew.-%  Maiskleberfutter
3,0 Gew.-%  Melasse
2,0 Gew.-%  Tierkörpermehl
2,0 Gew.-%  Futterfett
1,6 Gew.-%  Spurenelement-Vitamin-Wirkstoff-Vormischung

in einem Anteil von 2,0 Gew.-% zugesetzt. Bei der Pelletierung auf einer Ringmatrizenpresse zu Zylindern mit 6 mm Durchmesser wird ein Durchsatz von 439 kg/h erzielt und eine Preßenergie von 41,6 kWh/t benötigt.

Bei Einsatz eines erfindungsgemäßen Phosphats mit

12,0 Gew.-%  Natrium
22,1 Gew.-%  Calcium
38,0 Gew.-%  P₂O₅

in einem Anteil von 2,4 Gew.-% zu dem sonst gleich zusammengesetzten Mischfutter, wobei nur der Anteil des Maisschrotes auf 46,0 Gew.-% reduziert ist, erhöht sich beim Pelletieren der Durchsatz auf 470 kg/h und die Preßenergie sinkt erheblich auf 31,8 kWh/t ab.

4

Tabelle 1

|  | Beispiel 1 | | Beispiel 2 | | Beispiel 3 | | Beispiel 4 | |
|---|---|---|---|---|---|---|---|---|
| Trocknungstemperatur, °C | 100 | 200 | 100 | 200 | 100 | 200 | 100 | 200 |
| $P_2O_5$-Gehalt (gesamt), Gew.-% | 47,3 | 50,8 | 43,0 | 45,0 | 52,6 | 55,3 | 30,4 | 31,7 |
| $P_2O_5$-Gehalt ($H_2O$-löslich) (relativ), Gew.-% | 42,5 | 5,1 | 24,2 | 4,2 | 37,1 | 7,8 | 19,9 | 4,1 |
| Natrium-Gehalt (gesamt), Gew.-% | 12,1 | 13,0 | 12,0 | 12,6 | 6,3 | 6,6 | 17,3 | 18,1 |
| $Na^+$ ($H_2O$-löslich) (relativ), Gew.-% | 95,0 | 18,5 | 69,2 | 15,1 | 83,0 | 15,0 | 46,0 | 14,0 |
| Calcium (gesamt), Gew.-% | 15,1 | 16,4 | 19,1 | 20,0 | 16,8 | 17,6 | 18,4 | 19,2 |
| pH-Wert | 7,2 | 7,9 | 9,4 | 11,2 | 4,9 | 5,2 | 10,8 | 10,4 |
| Molverhältnis Ca/$P_2O_5$ | 1,13 | 1,15 | 1,58 | 1,58 | 1,13 | 1,13 | 2,14 | 2,15 |
| Molverhältnis Na/$P_2O_5$ | 1,58 | 1,58 | 1,72 | 1,73 | 0,74 | 0,74 | 3,51 | 3,53 |

Tabelle 2

|  | Beispiel 5 Na—Ca—Mg-Phosphat | | Beispiel 6 Na—Ca-Phosphat | |
|---|---|---|---|---|
| Trocknungstemperatur, °C | 60 | 200 | 90 | 200 |
| $P_2O_5$-Gehalt (gesamt), Gew.-% | 42,4 | 50,2 | 46,3 | 49,0 |
| $P_2O_5$ (wasserlöslich) (% rel.), Gew.-% | 60 | 1 | 46 | 8 |
| Natrium-Gehalt (gesamt), Gew.-% | 13,2 | 15,4 | 11,2 | 11,3 |
| $Na^+$ (wasserlöslich), (% rel.), Gew.-% | 94 | 3 | 87 | 30 |
| Calcium, Gew.-% | 6,5 | 7,7 | 15,6 | 16,4 |
| Magnesium, Gew.-% | 4,7 | 5,5 | 0,9 | 0,9 |
| pH-Wert (1 : 100) | 7,1 | 10,0 | 6,6 | 10,8 |
| Gewichtsverlust bei 105° C, Gew.-% | 11,0 | <0,1 | 1,2 | <0,1 |
| $H_2O$-Aufnahme bei 80% rel. Feuchte; 20° C/24 Stunden, Gew.-% | 9,9 | 0,2 | 24,3 | 3,4 |
| Siebanalyse |  |  |  |  |
| 0,8 mm | 67 | 76 | 75 | 75 |
| 0,5 mm | 33 | 43 | 33 | 38 |
| 0,3 mm | 9 | 9 | 8 | 9 |

Tabelle 3

| | Na−Ca−Mg-Phosphat | | Na−Ca-Phosphat | |
|---|---|---|---|---|
| Trocknungstemperatur, °C | 60 | 200 | 90 | 200 |
| **Melassezugabe:** | | | | |
| 5 Gew.-% | staubig, rieselfähig | staubfrei, rieselfähig | staubfrei, rieselfähig | staubfrei, rieselfähig |
| 7 Gew.-% | staubfrei, rieselfähig | staubfrei, rieselfähig | staubfrei, rieselfähig | staubfrei, rieselfähig |
| 9 Gew.-% | staubfrei, verharscht | staubfrei, rieselfähig | staubfrei, verharscht | staubfrei, rieselfähig |
| 11 Gew.-% | staubfrei, verbacken | staubfrei, rieselfähig | staubfrei, verbacken | staubfrei, rieselfähig |

## Patentansprüche

1. Verfahren zur Herstellung von Natrium, Calcium und gegebenenfalls Magnesium enthaltenden Mischphosphaten durch Vermischen der Oxide, Hydroxide oder Carbonate des Natriums, Calciums und gegebenenfalls Magnesiums mit wäßrigen Phosphorsäure- oder sauren Natriumphosphatlösungen in einer oder mehreren Stufen, erforderlichenfalls unter Zugabe von Rückgut, dadurch gekennzeichnet, daß das Reaktionsgemisch, in dem ein Molverhältnis $Na_2O : CaO : P_2O_5$ von 0,5 bis 1,75 : 0,4 bis 2,5 : 1 eingestellt ist, nach Abschluß des Mischens bei Temperaturen von 130 bis 250°C getrocknet wird.

2. Verfahren nach Anspruch 1, dadurch gekennzeichnet, daß in dem Reaktionsgemisch durch Zusatz der Magnesiumverbindung ein Molverhältnis $MgO : P_2O_5$ von >0 bis 2,0 : 1 eingestellt wird.

## Claims

1. Process for the preparation of a phosphate mixture containing sodium, calcium and optionally magnesium by mixing the oxides, hydroxides or carbonates of the sodium, calcium and optionally magnesium with aqueous phosphoric acid solutions or acid sodium phosphate solutions in one or several stages, if necessary with the addition of recycled material, caracterized in that the reaction mixture, in which a molar ratio $Na_2O : CaO : P_2O_5$ of 0.5 to 1.75 : 0.4 to 2.5 : 1 is adjusted, is dried after completion of mixing at temperatures of 130 to 250°C.

2. Process according to claim 1, caracterized in that a molar ratio $MgO : P_2O_5$ of >0 to 2.0 : 1 is adjusted in the reaction mixture by addition of the magnesium compound.

## Revendications

1. Procédé de préparation d'un mélange de phosphates contenant du sodium, du calcium et, le cas échéant, du magnésium par mélange des oxydes, hydroxydes ou carbonates de sodium, de calcium et, le cas échéant, de magnésium avec des solutions aqueuses d'acide phosphorique ou des solutions acides de phosphate de sodium en une ou plusieurs étapes, si nécessaire avec addition de produit recyclé, caractérisé en ce que le mélange réactionnel, dans lequel est réglé un rapport moléculaire $Na_2O : CaO : P_2O_5$ de 0,5 à 1,75 : 0,4 à 2,5 : 1, est séché, une fois le mélange terminé, à des températures de 130 à 250°C.

2. Procédé suivant la revendication 1, caractérisé en ce qu'un rapport moléculaire $MgO : P_2O_5$ de >0 à 2,0 : 1 est réglé dans le mélange réactionnel par addition du composé magnésien.